# FASCICULE DE BREVET EUROPEEN

(11) **EP 1 606 152 B1**
(45) Date de publication et mention de la délivrance du brevet: **17.09.2008**
(21) Numéro de dépôt: 03815420.9
(22) Date de dépôt: 17.12.2003
(51) Int. Cl.: B60T 7/06

(54) **DISPOSITIF DE MONTAGE D UNE PEDALE DE VEHICULE AUTOMOBILE**
VORRICHTUNG ZUR MONTAGE EINES KRAFTFAHRZEUGPEDALS
DEVICE FOR MOUNTING A MOTOR VEHICLE PEDAL

(30) Priorité: 20.12.2002 FR 0216351
(43) Date de publication de la demande: 21.12.2005
(73) Titulaire: RENAULT S.A.S., 92100 Boulogne Billancourt (FR)
(72) Inventeur: BOURGET, Benoît, F-78180 Montigny Le Bretonneux (FR); DESLANDES, Max, F-78690 Les Essarts le Roi (FR); TIXIER, Philippe, F-78280 GUYANCOURT (FR)
(74) Mandataire: Davies, Owen Robert Treharne
(86) Numéro de dépôt international: PCT/FR2003/003764
(87) Numéro de publication internationale: WO 2004/065189

(56) Documents cités:
- EP-A- 0 827 885
- EP-A- 1 065 114
- EP-A- 1 253 051
- WO-A-02/22412
- WO-A-02/22413
- FR-A- 2 832 969
- US-B1- 6 178 846

## Description

L'invention concerne un dispositif de montage d'une pédale de véhicule automobile, et plus particulièrement de pédale de frein.

L'invention concerne plus particulièrement un dispositif de montage de pédale de frein dans lequel la pédale est escamotable en cas de choc.

Dans un véhicule, le pédalier est généralement monté sur une tôle séparant le compartiment moteur et l'habitacle, appelée tablier. Or, en cas de choc, le tablier se déplace vers l'intérieur de l'habitacle et fait reculer le pédalier vers le conducteur au risque de blesser ses chevilles. On utilise alors généralement des systèmes de montage de pédale dans lesquels la pédale se déplace vers le plancher en cas de choc.

On connaît ainsi par la demande de brevet français n° FR 0115499 déposée le 30 novembre 2001 par la demanderesse, un dispositif de montage de pédale de frein comprenant un support sur lequel la pédale est montée par l'intermédiaire d'un axe de pédale, ainsi qu'un basculeur. En cas de choc, le basculeur est heurté par un élément de structure fixe du véhicule et il impose à l'axe de pédale un déplacement de l'avant vers l'arrière entre deux positions, de façon que l'extrémité libre de la pédale comportant le patin soit dirigée vers l'avant du véhicule et ne risque pas de blesser la cheville du conducteur.

Cependant, dans ce type de montage, la partie supérieure du basculeur doit être suffisamment longue de façon que son extrémité soit en vis-à-vis de l'élément de structure fixe. Dans le cas où l'élément de structure est situé plus bas que l'extrémité de la partie supérieure du basculeur, la force exercée par l'élément de structure sur le basculeur n'est plus suffisante. L'élément de structure risque alors de ne pas faire pivoter le basculeur suffisamment pour libérer la pédale, ou bien de se briser au contact du basculeur si l'élément de structure est trop mince. Dans les deux cas, cela peut être très préjudiciable pour le conducteur.

Le document WO-0222413 présente un dispositif de montage de pédale dans un véhicule comprenant un support sur lequel la pédale est montée. Lors d'une collision frontale du véhicule, la section absorbant l'effort du à l'impact permet au support de se déformer et de se comprimer en une position dans laquelle le bras de pédale est rétracté vers l'avant du véhicule ne risquant pas de heurter le conducteur.

Afin de pallier ces inconvénients, l'invention a pour objet un dispositif de montage de pédale de véhicule automobile dans lequel la hauteur de la partie de basculeur en vis-à-vis de l'élément de structure est réduite afin de diminuer l'effort nécessaire pour la libération de la pédale.

A cet effet, l'invention propose un dispositif de montage d'une pédale de véhicule automobile, comportant un support fixe par rapport auquel la pédale est montée pivotante autour d'un axe transversal de pédale, qui, en cas d'un choc dirigé de l'avant vers l'arrière du véhicule, est apte à se déplacer selon une rotation autour d'un axe transversal fixe par rapport au support, depuis une position haute avant choc vers une position basse après choc, et comportant un basculeur dont une partie supérieure se trouve en vis-à-vis d'un élément de structure du véhicule et qui est monté mobile par rapport au support fixe entre une position initiale de verrouillage de l'axe de pédale en position haute, une position intermédiaire de libération de l'axe de pédale et une position finale, le basculeur agissant sur l'axe de pédale, au cours de son passage de la position intermédiaire à la position finale, de façon à provoquer son déplacement de sa position haute vers sa position basse, caractérisé en ce que, en cas de choc, lorsque la partie supérieure du basculeur est heurtée par l'élément de structure,
- le basculeur passe de sa position initiale à sa position intermédiaire de libération de l'axe de pédale selon une translation horizontale d'arrière en avant, puis
- le basculeur passe de sa position intermédiaire à sa position finale en basculant autour dudit axe fixe.

Un des avantages de la présente invention est que les mouvements de translation et de rotation sont prédéfinis et permettent de libérer la pédale en cas de choc frontal du véhicule avec une grande sûreté de fonctionnement du dispositif. D'autre part, les pièces de ce dispositif ne se déforment pas et ne risquent pas de libérer la pédale dans une position qui n'était pas prévue au départ ou bien qui risque de blesser les chevilles du conducteur.

Selon d'autres caractéristiques de l'invention:
- Le basculeur comporte une lumière horizontale à travers laquelle s'étend l'axe fixe de façon à permettre le passage par translation du basculeur de sa position initiale vers sa position intermédiaire de libération de l'axe de pédale.
- L'axe de pédale est porté par une bielle, qui est montée pivotante autour de l'axe fixe et qui reliée au basculeur par un élément de liaison, de façon que, lorsque le basculeur passe par rotation de sa position intermédiaire à sa position finale, l'axe de pédale passe de sa position haute vers sa position basse.
- L'élément de liaison est une tige transversale s'étendant à travers une lumière horizontale ménagée dans le basculeur de façon à permettre le passage par translation du basculeur de sa position initiale vers sa position intermédiaire de libération de l'axe de pédale.
- En l'absence de choc, le basculeur est immobilisé en basculement autour de l'axe fixe par au moins un moyen de retenue apte à être inactivé lorsque, sous l'action d'un choc, le basculeur se déplace vers sa position intermédiaire.
- Le moyen de retenue est une partie avant du basculeur formant crochet coopérant avec un doigt relié au support.
- Le moyen de retenue est un clip fusible.
- La pédale est reliée à un organe du véhicule par une tige de liaison située entre l'axe de pédale et une extrémité libre de la pédale, de façon que, lorsque l'axe de pédale se déplace de sa position haute vers sa position basse, l'extrémité libre de la pédale se déplace de l'arrière vers l'avant du véhicule.

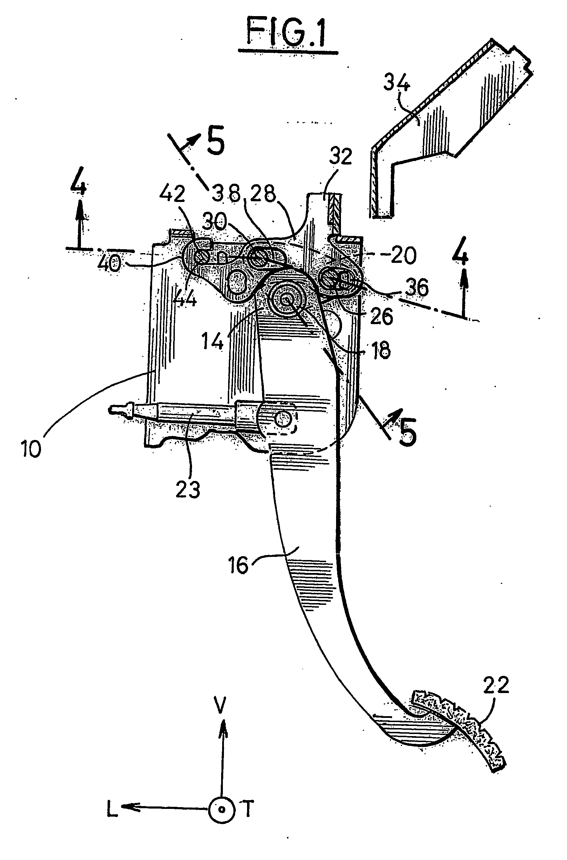

D'autres caractéristiques et avantages de l'invention apparaîtront à la lecture de la description d'exemples de réalisation de dispositif de montage de pédale au dessin annexé dans lequel :
- La figure 1 est une vue schématique en section selon le plan 1-1 de la figure 4 du dispositif de montage de pédale selon l'invention en position initiale avant un choc.
- La figure 2 est une vue du dispositif de la figure 1 dans une position intermédiaire pendant le choc.
- La figure 3 est une vue du dispositif de la figure 1 en position finale après le choc.
- La figure 4 est une vue en coupe du dispositif selon la ligne 4-4 de la figure 1.
- La figure 5 est une vue en coupe du dispositif selon la ligne 5-5 de la figure 1.
Dans la description qui suit, nous prendrons comme axes de référence l'axe T correspondant à l'axe transversal du véhicule, l'axe L correspondant à l'axe longitudinal du véhicule et l'axe V correspondant à l'axe vertical, selon le trièdre L,V,T indiqué à la figure 1. Sur les figures, on considère que l'avant du véhicule se trouve à gauche tandis que l'arrière correspond à la droite.
Le dispositif de montage de pédale décrit présente une symétrie par rapport à un plan longitudinal médian 1-1. Dans la suite de la description, on ne décrira donc que la moitié du dispositif.

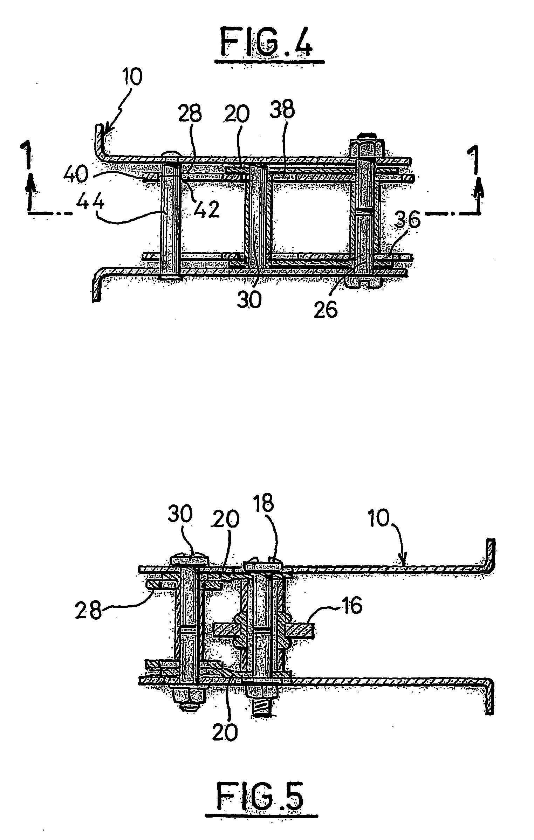

Tel que représenté aux figures 1, 4 et 5, le dispositif comporte un support comportant un flasque longitudinal 10 fixé sur un tablier non représenté.

Une extrémité supérieure 14 d'une pédale 16, d'orientation globale verticale, est montée à rotation autour d'un axe de pédale 18 transversal porté par une bielle 20. Aux figures 1, 4 et 5, l'axe de pédale 18 se trouve dans une position de repos dite position haute. L'extrémité inférieure libre de la pédale 16 est munie d'un patin d'actionnement 22.

La pédale 16 est reliée à un organe de commande du véhicule, non représenté, tel qu'un amplificateur de freinage, ici, en un point situé entre le patin 22 et l'axe de pédale 18 par l'intermédiaire d'une tige de liaison 23 orientée horizontalement et vers l'avant.

La bielle 20, d'orientation longitudinale, est montée à rotation autour d'un axe transversal 26 fixe monté sur le support 10. L'axe transversal 26 appartient à un plan horizontal situé au-dessus de celui contenant l'axe de pédale 14. L'axe transversal 26 est aussi situé en arrière par rapport à l'axe de pédale 14. La bielle 20 est aussi reliée à un basculeur 28 par l'intermédiaire d'un élément de liaison transversal 30.

L'élément de liaison 30 est porté par la bielle 20 et appartient à un plan horizontal situé au-dessus de celui contenant l'axe transversal 26. L'élément de liaison est situé vers l'avant par rapport à l'axe de pédale 14.

Les deux éléments longitudinaux du basculeur 28, symétriques par rapport au plan 1-1, se rejoignent pour former une extrémité libre supérieure 32 se trouvant en vis-à-vis et à distance d'un élément de structure 34 du véhicule.

Le basculeur 28 comporte deux lumières horizontales 36 et 38 traversées respectivement par l'axe fixe 26 et par l'élément de liaison 30.

Des moyens de retenue sont prévus de façon à immobiliser le basculeur 28 en basculement autour de l'axe fixe, lors du fonctionnement normal du véhicule, c'est-à-dire en l'absence de choc.

A cet effet, la partie avant 40 du basculeur 28 est ici en forme d'un crochet 42 qui coopère avec une tige transversale 44 dont les extrémités sont fixées sur le support 10. Le crochet 42 est ouvert vers l'arrière et vers le haut.

Le basculeur 28 peut aussi être muni d'un clip fusible coopérant avec le support 10, pouvant être sectionné en cas de choc afin de permettre le déplacement du basculeur 28 par rapport au support fixe 10.

Lors du fonctionnement normal du véhicule, lorsqu'un conducteur exerce une poussée avec son pied sur le patin 22 de la pédale de frein 16, la pédale 16 effectue une rotation autour de l'axe de pédale 18 selon le sens horaire. Le mouvement de la pédale 16 provoque alors le déplacement de la tige de liaison 23, qui actionne ainsi les moyens d'amplification de freinage.

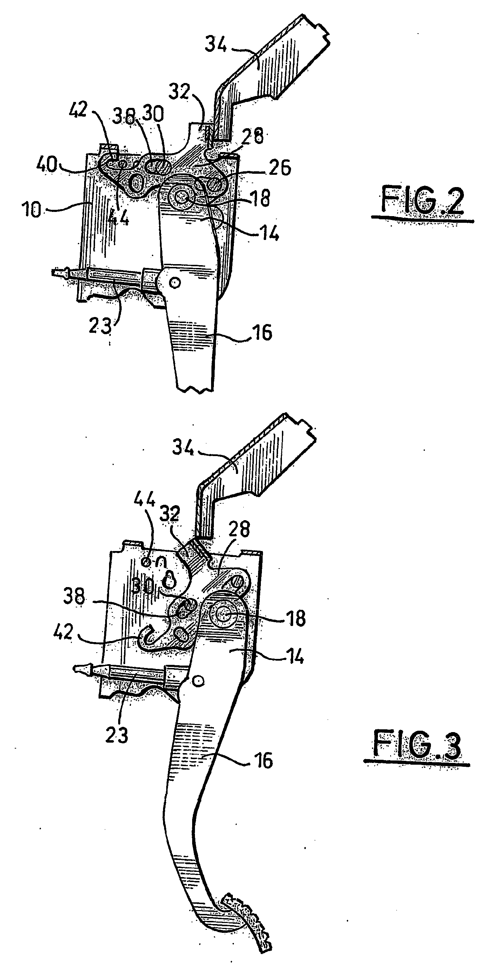

Tel que représenté à la figure 2, un choc horizontal d'avant en arrière, provoque le recul du tablier et du support 10, c'est-à-dire un déplacement de gauche à droite en considérant les figures 1 à 3.

On considérera dans la suite de la description que le choc provoque un mouvement relatif de l'élément de structure 34 d'arrière en avant par rapport au support 10 qui reste fixe.

Suite au choc, l'élément de structure 34 percute l'extrémité supérieure 32 du basculeur 28. L'axe fixe 26 et l'élément de liaison 30 étant aptes à se déplacer librement à l'intérieur des lumières respectivement 36 et 38, le basculeur 28 effectue une translation horizontale d'arrière en avant depuis sa position initiale vers sa position intermédiaire, par rapport au support fixe 10.

En position intermédiaire (figure 2), la course du basculeur 28 par rapport au support 10 est telle que la tige transversale 44 est libérée du crochet 42, le basculeur 28 n'étant ainsi plus immobilisé en basculement autour de l'axe fixe 26.

Lors du passage du basculeur 28 de sa position initiale à sa position intermédiaire, on note que la bielle 20 est restée fixe par rapport au support 10 et que l'axe de pédale 18 est donc toujours en position initiale haute.

Pour atteindre la position représentée à la figure 3, l'élément de structure 34 a continué à exercer une poussée sur l'extrémité supérieure 32 du basculeur 28.

De ce fait, le basculeur 28 n'étant plus immobilisé en basculement, il bascule autour de l'axe fixe 26 selon le sens anti-horaire et passe de sa position intermédiaire à sa position finale représentée à la figure 3.

La bielle 20 étant reliée au basculeur 28 par l'intermédiaire de l'élément de liaison 22, le basculeur 28 entraîne la bielle 20 qui pivote alors aussi autour de l'axe fixe 26 selon le sens anti-horaire.

L'axe de pédale 18, porté par la bielle 20 passe simultanément de sa position haute vers une position basse, selon une rotation dans le sens anti-horaire autour de l'axe fixe 26.

L'axe de pédale 18 étant passé d'une position haute à une position basse et la pédale 16 étant reliée à la tige de liaison 23, le patin 22 de la pédale 16 effectue un mouvement globalement d'arrière en avant.

L'invention en objet présente donc l'avantage, en rabattant la pédale de frein vers le bas, de prévenir les risques de lésions physiologiques pour le conducteur, en particulier d'éviter de lui blesser la cheville en cas d'accident.

La présente invention n'est nullement limitée au mode de réalisation décrit qui n'a été donné qu'à titre d'exemple. L'invention peut également concerner une pédale commandant un organe autre qu'un amplificateur de freinage. En particulier, ce type de dispositif de montage peut aussi s'appliquer à une pédale d'embrayage.

## Revendications

1. Dispositif de montage d'une pédale (16) de véhicule automobile, comportant un support fixe (10) par rapport auquel la pédale (16) est montée pivotante autour d'un axe transversal (18) de pédale, qui, en cas d'un choc dirigé de l'avant vers l'arrière du véhicule, est apte à se déplacer selon une rotation autour d'un axe transversal fixe (26) par rapport au support (10), depuis une position haute avant choc vers une position basse après choc, et comportant un basculeur (28) dont une partie supérieure (32) se trouve en vis-à-vis d'un élément de structure (34) du véhicule et qui est monté mobile par rapport au support fixe (10) entre une position initiale de verrouillage de l'axe de pédale (18) en position haute, une position intermédiaire de libération de l'axe de pédale (18) et une position finale, le basculeur (28) agissant sur l'axe de pédale (18), au cours de son passage de la position intermédiaire à la position finale, de façon à provoquer son déplacement de sa position haute vers sa position basse, **caractérisé en ce que,** en cas de choc, lorsque la partie supérieure (32) du basculeur (28) est heurtée par l'élément de structure (34),
- le basculeur (28) passe de sa position initiale à sa position intermédiaire de libération de l'axe de pédale (18) selon une translation horizontale d'arrière en avant, puis
- le basculeur (28) passe de sa position intermédiaire à sa position finale en basculant autour dudit axe fixe (26).

2. Dispositif de montage d'une pédale (16) selon la revendication 1, **caractérisé en ce que** le basculeur (28) comporte une lumière horizontale (36) à travers laquelle s'étend l'axe fixe (26) de façon à permettre le passage par translation du basculeur (28) de sa position initiale vers sa position intermédiaire de libération de l'axe de pédale (18).

3. Dispositif de montage d'une pédale (16) selon l'une quelconque des revendications précédentes, **caractérisé en ce que** l'axe de pédale (18) est porté par une bielle (20), qui est montée pivotante autour de l'axe fixe (26) et qui reliée au basculeur (28) par un élément de liaison (30), de façon que, lorsque le basculeur (28) passe par rotation de sa position intermédiaire à sa position finale, l'axe de pédale (18) passe de sa position haute vers sa position basse.

4. Dispositif de montage d'une pédale (16) la revendication 3, **caractérisé en ce que** l'élément de liaison (30) est une tige transversale s'étendant à travers une lumière horizontale (38) ménagée dans le basculeur (28) de façon à permettre le passage par translation du basculeur (28) de sa position initiale vers sa position intermédiaire de libération de l'axe de pédale (18).

5. Dispositif de montage d'une pédale (16) selon l'une quelconque des revendications précédentes, **caractérisé en ce que** en l'absence de choc, le basculeur (28) est immobilisé en basculement autour de l'axe fixe (26) par au moins un moyen de retenue (42) apte à être inactivé lorsque, sous l'action d'un choc, le basculeur (28) se déplace vers sa position intermédiaire.

6. Dispositif de montage d'une pédale (16) selon la revendication précédente, **caractérisé en ce que** le moyen de retenue (42) est une partie avant (40) du basculeur formant crochet coopérant avec un doigt (44) relié au support (10).

7. Dispositif de montage d'une pédale selon la revendication 5, **caractérisé en ce que** le moyen de retenue (42) est un clip fusible.

8. Dispositif de montage d'une pédale (16) selon l'une quelconque des revendications précédentes, **caractérisé en ce que** la pédale (16) est reliée à un organe du véhicule par une tige de liaison (23) située entre l'axe de pédale (18) et une extrémité libre de la pédale, de façon que, lorsque l'axe de pédale (18) se déplace de sa position haute vers sa position basse, l'extrémité libre de la pédale se déplace de l'arrière vers l'avant du véhicule.

## Claims

1. Device for mounting a motor vehicle pedal (16) comprising a fixed support (10) with respect to which the pedal (16) is mounted such that it can pivot about a transverse pedal pivot pin (18) which, in the event of an impact directed from the front of the vehicle rearwards, is able to move in a rotational movement about a transverse pivot pin (26) that is fixed with respect to the support (10), from a high position prior to the impact into a low position after the impact, and comprising a rocker (28), an upper part (32) of which faces a structural element (34) of the vehicle and which is mounted such that it can move with respect to the fixed support (10) between an initial position in which the pedal pivot pin (18) is locked in the high position, an intermediate position in which the pedal pivot pin (18) is free and a final position, the rocker (28) acting on the pedal pivot pin (18), as it moves from the intermediate position into the final position, in such a way as to cause it to move from its high position to its low position, **characterized in that,** in the event of an impact, when the upper part (32) of the rocker (28) is struck by the structural element (34),
- the rocker (28) moves from its initial position into its intermediate position in which the pedal pivot pin (18) is free, in a forward horizontal translational movement, then
- the rocker (28) moves from its intermediate position into its final position by pivoting about the said fixed pivot pin (26).

2. Device for mounting a pedal (16) according to Claim 1, **characterized in that** the rocker (28) has a horizontal slot (36) through which the fixed pivot pin (26) extends so as to allow the rocker (28) to move in a translational movement from its initial position into its intermediate position in which the pedal pivot pin (18) is free.

3. Device for mounting a pedal (16) according to either one of the preceding claims, **characterized in that** the pedal pivot pin (18) is borne by a link rod (20) which is mounted such that it can pivot about the fixed pivot pin (26) and which is connected to the rocker (28) by a connecting element (30) such that when the rocker (28) moves through a rotational movement from its intermediate position into its final position, the pedal pivot pin (18) moves from its high position to its low position.

4. Device for mounting a pedal (16) according to Claim 3, **characterized in that** the connecting element (30) is a transverse rod extending through a horizontal slot (38) formed in the rocker (28) so as to allow the rocker (28) to move in a translational movement from its initial position to its intermediate position in which the pedal pivot pin (18) is free.

5. Device for mounting a pedal (16) according to any one of the preceding claims, **characterized in that,** in the absence of any impact, the rocker (28) is immobilized in terms of rocking about the fixed pivot pin (26) by at least one retaining means (42) capable of being deactivated when, under the effect of an impact, the rocker (28) moves into its intermediate position.

6. Device for mounting a pedal (16) according to the preceding claim, **characterized in that** the retaining means (42) is a front part (40) of the rocker that forms a hook engaging with a finger (44) connected to the support (10).

7. Device for mounting a pedal according to Claim 5, **characterized in that** the retaining means (42) is a rupture clip.

8. Device for mounting a pedal (16) according to any one of the preceding claims, **characterized in that** the pedal (16) is connected to a component of the vehicle by a connecting rod (23) situated between the pedal pivot pin (18) and a free end of the pedal so that when the pedal pivot pin (18) moves from its high position into its low position, the free end of the pedal moves forwards towards the front of the vehicle.

## Patentansprüche

1. Vorrichtung zur Montage eines Kraftfahrzeugpedals (16), die einen ortsfesten Träger (10) aufweist, bezüglich dessen das Pedal (16) um eine Querpedalachse (18) schwenkbar montiert ist, die im Fall eines von der Vorderseite zur Rückseite des Fahrzeugs gerichteten Stoßes in der Lage ist, sich gemäß einer Drehung um eine bezüglich des Trägers (10) ortsfeste Querachse (26) von einer hohen Stellung vor dem Stoß in eine tiefe Stellung nach dem Stoß zu verschieben, und einen Kipphebel (28) aufweist, von dem ein oberer Bereich (32) sich gegenüber einem Strukturelement (34) des Fahrzeugs befindet und der bezüglich des ortsfesten Trägers (10) zwischen einer Anfangsstellung der Verriegelung der Pedalachse (18) in der hohen Stellung, einer Zwischenstellung der Freigabe der Pedalachse (18) und einer Endstellung beweglich montiert ist, wobei der Kipphebel (28) auf die Pedalachse (18) während seines Übergangs von der Zwischenstellung in die Endstellung so einwirkt, dass er ihre Verschiebung von ihrer hohen Stellung in ihre tiefe Stellung bewirkt, **dadurch gekennzeichnet, dass** im Fall eines Stoßes, wenn der obere Bereich (32) des Kipphebels (28) vom Strukturelement (34) angestoßen wird,
- der Kipphebel (28) von seiner Anfangsstellung in seine Zwischenstellung der Freigabe der Pedalachse (18) gemäß einer waagrechten Translationsbewegung von hinten nach vorne übergeht, dann
- der Kipphebel (28) von seiner Zwischenstellung in seine Endstellung übergeht, indem er um die ortsfeste Achse (26) kippt.

2. Vorrichtung zur Montage eines Pedals (16) nach Anspruch 1, **dadurch gekennzeichnet, dass** der Kipphebel (28) ein waagrechtes Langloch (36) aufweist, durch das hindurch sich die ortsfeste Achse (26) erstreckt, um den Übergang des Kipphebels (28) durch Translationsverschiebung von seiner Anfangsstellung in seine Zwischenstellung der Freigabe der Pedalachse (18) zu ermöglichen.

3. Vorrichtung zur Montage eines Pedals (16) nach einem der vorhergehenden Ansprüche, **dadurch gekennzeichnet, dass** die Pedalachse (18) von einer Pleuelstange (20) getragen wird, die schwenkbar um die ortsfeste Achse (26) montiert und mit dem Kipphebel (28) über ein Verbindungselement (30) verbunden ist, so dass, wenn der Kipphebel (28) durch Drehung von seiner Zwischenstellung in seine Endstellung übergeht, die Pedalachse (18) von ihrer hohen Stellung in ihre tiefe Stellung übergeht.

4. Vorrichtung zur Montage eines Pedals (16) nach Anspruch 3, **dadurch gekennzeichnet, dass** das Verbindungselement (30) eine Querstange ist, die sich durch ein waagrechtes Langloch (38) erstreckt, das im Kipphebel (28) angeordnet ist, um den Übergang des Kipphebels (28) durch Translationsverschiebung von seiner Anfangsstellung in seine Zwischenstellung der Freigabe der Pedalachse (18) zu ermöglichen.

5. Vorrichtung zur Montage eines Pedals (16) nach einem der vorhergehenden Ansprüche, **dadurch gekennzeichnet, dass** in Abwesenheit eines Stoßes das Kippen des Kipphebels (28) um die ortsfeste Achse (26) von mindestens ein Haltemittel (42) blockiert wird, das inaktiviert werden kann, wenn der Kipphebel (28) sich unter der Einwirkung eines Stoßes in seine Zwischenstellung verschiebt.

6. Vorrichtung zur Montage eines Pedals (16) nach dem vorhergehenden Anspruch, **dadurch gekennzeichnet, dass** das Haltemittel (42) ein vorderer Bereich (40) des Kipphebels ist, der einen Haken bildet, der mit einem mit dem Träger (10) verbundenen Finger (44) zusammenwirkt.

7. Vorrichtung zur Montage eines Pedals nach Anspruch 5, **dadurch gekennzeichnet, dass** das Haltemittel (42) ein schmelzbarer Clip ist.

8. Vorrichtung zur Montage eines Pedals (16) nach einem der vorhergehenden Ansprüche, **dadurch gekennzeichnet, dass** das Pedal (16) mit einem Organ des Fahrzeugs über eine Verbindungsstange (23) verbunden ist, die sich zwischen der Pedalachse (18) und einem freien Ende des Pedals befindet, so dass, wenn die Pedalachse (18) sich von ihrer hohen Stellung in ihre tiefe Stellung verschiebt, das freie Ende des Pedals sich im Fahrzeug von hinten nach vorne verschiebt.
